Europäisches Patentamt

European Patent Office

Office européen des brevets

(11) Publication number: **0 079 092**
**B1**

(12) **EUROPEAN PATENT SPECIFICATION**

(45) Date of publication of patent specification: **10.04.85**

(21) Application number: **82201285.2**

(22) Date of filing: **14.10.82**

(51) Int. Cl.⁴: **C 10 J 3/48, C 10 J 3/78,**
**B 01 J 3/00**

(54) Apparatus for gasifying finely divided fuels.

(30) Priority: **09.11.81 NL 8105051**

(43) Date of publication of application:
**18.05.83 Bulletin 83/20**

(45) Publication of the grant of the patent:
**10.04.85 Bulletin 85/15**

(84) Designated Contracting States:
**BE DE FR GB NL SE**

(56) References cited:
**DE-A-3 009 850**
**FR-A-2 273 232**
**GB-A- 648 856**
**US-A-2 840 049**

(73) Proprietor: **SHELL INTERNATIONALE**
**RESEARCH MAATSCHAPPIJ B.V.**
**Carel van Bylandtlaan 30**
**NL-2596 HR Den Haag (NL)**

(72) Inventor: **Schuurman, Pieter Jacobus**
**Carel van Bylandtlaan 30**
**NL-2596 HR The Hague (NL)**

(74) Representative: **Aalbers, Onno et al**
**P.O. Box 302**
**NL-2501 CH The Hague (NL)**

Courier Press, Leamington Spa, England.

## Description

The invention relates to an apparatus for gasifying finely divided fuels. In such an apparatus finely divided solid or liquid fuels are gasified in suspension with oxygen containing gases at elevated pressure, for example a pressure between 15 and 80 atm., at a temperature usually exceeding 1500°C during normal operation.

A problem inherent in apparatuses of this type is that during operation the apparatus is subject to high thermal and mechanical loads, which can cause substantial stresses in the structure and can result in rapid wear of the structural parts.

An object of the invention is to provide an apparatus in which the stress concentrations caused by the differential thermal expansion of the structural parts are low.

Another object of the invention is to provide an apparatus the parts of which can be fitted and replaced in a short time and in a simple manner.

A further object of the invention is to provide an apparatus that can be composed of parts possessing a relatively low dimensional accuracy.

To this end the apparatus according to the invention is characterized in that it consists of a pressure-resistant outer housing, an inner housing arranged in the pressure-resistant outer housing, a group of cooling tubes on the inside of the inner housing, wherein the cooling tubes are provided with fastening elements, which extend through openings in the inner housing and are connected to the inner housing.

An advantage of the apparatus according to the invention is that the inner housing and in particular the group of cooling tubes, which are exposed to high temperatures, can be completely or partly replaced in a short time.

An attractive embodiment of the apparatus according to the invention is characterized in that the inner housing is cylindrical and is built up of a series of cylindrical housing parts, which are interconnected in such a manner that a slit-shaped opening is invariably formed between the ends of each pair of successive housing parts.

A suitable embodiment of the apparatus according to the invention is characterized in that each cooling tube is provided with a series of substantially flat fastening elements arranged at predetermined intervals, each fastening element being substantially radially directed in relation to the central axis of the inner housing.

By suspending the cooling tubes from the inner housing by means of substantially flat fastening elements a relatively flexible connection with low heat conductivity is formed between the cooling tubes and the inner housing.

Moreover, the cooling tubes can be arranged very close to each other so that a large flow of heat can be removed through the cooling circuit.

The invention will be further illustrated below with reference to the drawings, wherein:

Fig. 1 shows a longitudinal section of an embodiment of the apparatus according to the invention;

Fig. 2 shows on a larger scale the detail ringed in Fig. 1 of the suspension of the cooling tubes from the inner housing;

Fig. 3 shows a section III—III of Fig. 2;

Fig. 4 shows a section IV—IV of Fig. 2;

Fig. 5 shows a longitudinal section of a detail of another embodiment of the apparatus according to the invention.

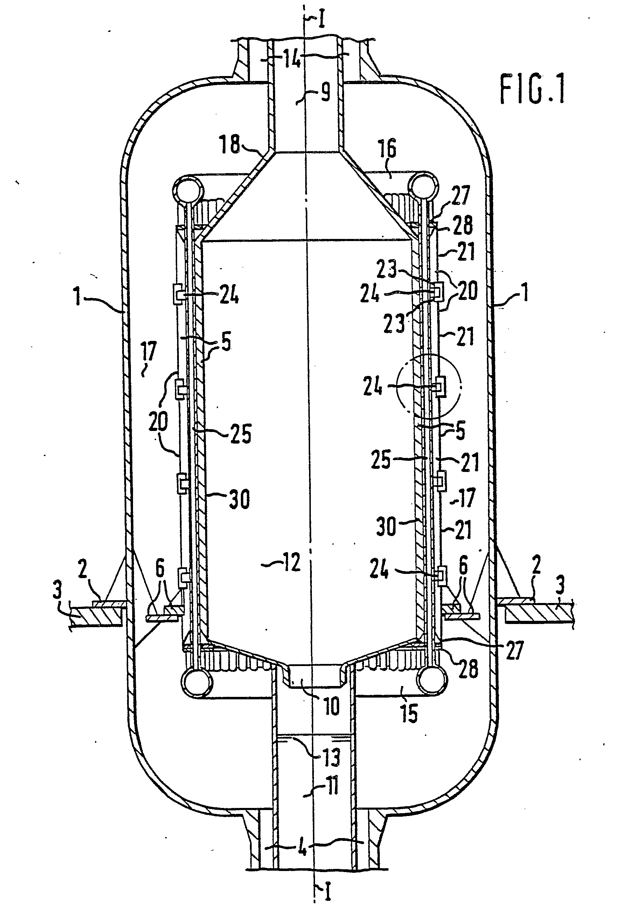

In Fig. 1 the pressure-resistant outer housing is indicated with reference numeral 1. The pressure-resistant outer housing 1 is cylindrical and rests on a supporting frame 3 by means of a supporting ring 2 in such a manner that the central axis I—I of the pressure-resistant outer housing 1 extends in vertical direction. In the pressure-resistant outer housing 1 an inner housing 5 is fitted that rests on the pressure-resistant outer housing 1 by means of supporting rings 6.

The pressure-resistant outer housing 1 and the inner housing 5 are provided with passages (not shown) for the supply of a mixture of finely divided fuel such as coal powder and oxygen to burners (not shown). The inner housing 5 and the outer housing 1 are also provided with passages 9, 14 for the discharge of combustion gases, and with passages 10, 4 for the discharge of slag, wherein during normal operation the part 11 under the combustion space 12 is filled with water 13, in which the liquid slag is cooled and solidifies.

The pressure-resistant outer housing 1 is further provided with passages (not shown) for supplying cooling water to a lower annular line 15, and for the discharge of cooling water and steam from an upper annular line 16.

The inner housing 5 is provided with a funnel-shaped upper part 18 that is connected to the passage 9.

In the walls of the inner housing 5 gas passages (not shown) are provided that form an open connection between the combustion space 12 and a space 17 between the outer housing 1 and the inner housing 5, in such a manner that during normal operation the pressure difference between the combustion space 12 and the space 17 is low compared with the pressure difference between the combustion space 12 and the atmosphere outside the pressure-resistant outer housing 1.

The side wall 20 of the inner housing 5 is built up of a series of cylindrical housing parts 21 that are interconnected in such a manner that between the ends 23 of each pair of successive housing parts 21 a slit-shaped opening 24 is formed.

On the inside of the side wall 20 of the inner housing 5 a group of cooling tubes 25 is provided, the top ends of the cooling tubes 25 being connected to the upper annular line 16 and the bottom ends of the cooling tubes 25 being connected to the lower annular line 15. Near their ends the cooling tubes 25 are passed through openings 27 in the spacer rings 28.

A lining 30 of refractory material is provided against the inner circumference of the group of cooling tubes 25. The mutual distance of adjacent cooling tubes 25 is preferably less than 1 mm.

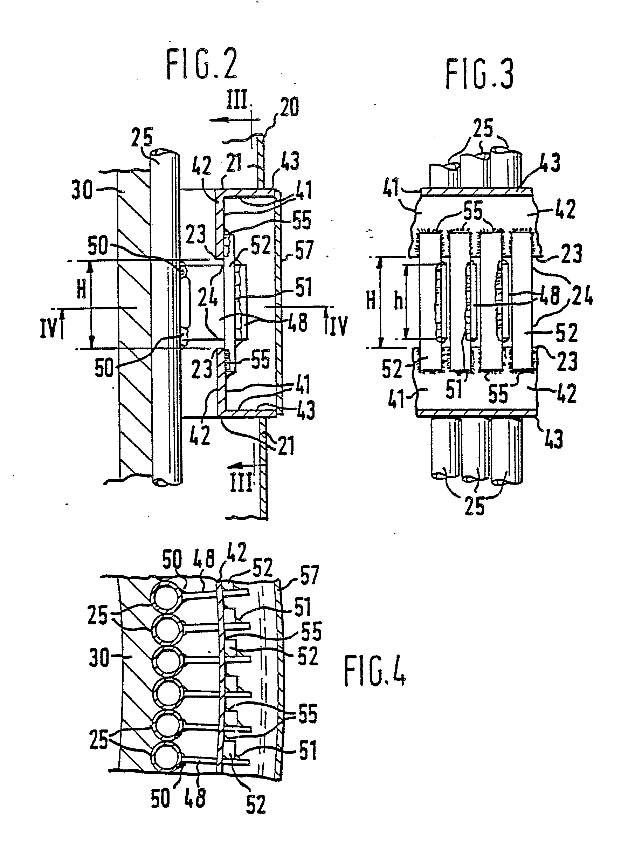

In the details shown in Figs. 2—4 of the suspension of the cooling tubes 25 from the side wall 20 of the inner housing 5 the housing parts 21 are each provided with an annular reinforcing section in the form of a square angle section 41, one leg 42 of the angle section 41 being directed axially, in such a manner that the end of the axial leg 42 forms the end 23 of the housing part 21 and the other leg 43 of the angle section 41 being directed radially outwards. Between the ends 23 of the successive housing parts 21 a slit-shaped opening 24 with a slit height H is formed, the slit height H being such that it exceeds the height h of fastening elements 48.

Each fastening element 48 is substantially flat and is connected to a cooling tube 25 by means of welded joints 50 and to a connecting strip 52 by means of a welded joint 51. Each connecting strip 52 is connected to the axial legs 42 of the angle sections 41 by means of welded joints 55. The ends of the radial legs 43 of the angle sections 41 are interconnected by means of a cylindrical sealing element 57.

In the embodiment of the apparatus shown in Figs. 1—4, the method for mounting the cooling tubes 25 on the side wall 20 of the inner housing 5 is as follows. The fastening elements 48 are welded to each cooling tube 25 at a predetermined mutual axial distance, which distance corresponds with the height of each housing part 21. The housing parts 21 are positioned in a template in such a relation to each other that between the ends 23 of the axial legs 42 of the angle sections 41, a slit-shaped opening 24 with a slit height H is invariably formed. Subsequently, the cooling tubes 25 are separately passed with their ends through the openings 27 in the spacer rings 28. Then the cooling tubes 25 are connected to the annular lines 15 and 16 and the connecting strips 52 are connected to the fastening elements 48 by means of the welded joints 51 and to the axial legs 42 of the angle sections 41 of the housing parts 21 by means of the welded joints 55. Finally, the cylindrical sealing elements 57 are welded to the radial legs 43 of the angular sections 41.

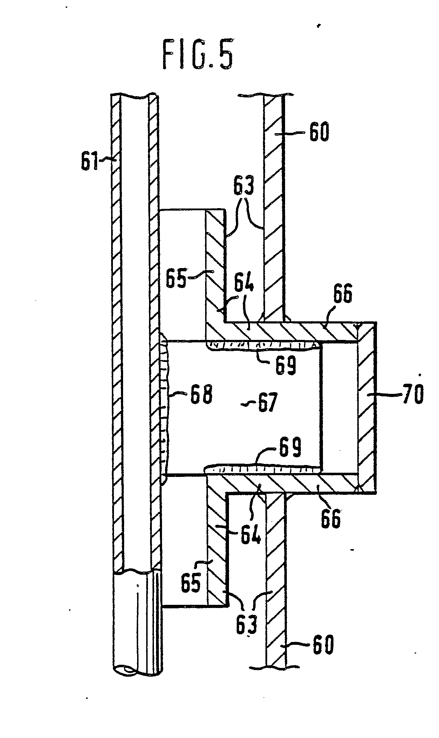

In the alternative suspension of a cooling tube 61 from an inner housing 60, as shown in Fig. 5, cylindrical housing parts 63 are provided at their ends with an angular section 64, one leg 65 of which is axially directed and the other leg 66 is radially directed. Substantially flat fastening elements 67 are invariably connected at one end to a cooling tube 61 by a welded joint 68 and at the top and bottom side to the radial legs 66 of the angle sections 64 by welded joints 69. The ends of the radial legs 66 of the angle sections 64 are interconnected by a cylindrical sealing element 70.

## Claims

1. Apparatus for gasifying finely divided fuels, characterized in that it consists of a pressure-resistant outer housing, an inner housing arranged in the pressure-resistant outer housing, a group of cooling tubes on the inside of the inner housing, wherein the cooling tubes are provided with fastening elements, which extend through openings in the inner housing and are connected to the inner housing.

2. Apparatus as claimed in claim 1, characterized in that the inner housing is cylindrical and is built up of a series of cylindrical housing parts, which are interconnected in such a manner that a slit-shaped opening is invariably formed between the ends of each pair of successive housing parts.

3. Apparatus as claimed in claim 2, characterized in that each housing part is integral with an annular reinforcing section at each end situated opposite the next housing part.

4. Apparatus as claimed in claim 3, characterized in that each reinforcing section is a square angle section one leg of which is directed axially in such a manner that the end of the axial leg forms the end of the housing part and the other leg of which is radially directed outwards.

5. Apparatus as claimed in claim 4, characterized in that the end of the radial leg of each reinforcing section is connected to the end of the radial leg of the reinforcing section of the next housing part by means of a cylindrical sealing element.

6. Apparatus as claimed in claims 1—5, characterized in that the longitudinal axes of the cooling tubes are parallel to the longitudinal axis of the inner housing.

7. Apparatus as claimed in claim 6, characterized in that the mutual distance of adjacent cooling tubes is less than 1 mm.

8. Apparatus as claimed in claims 6—7, characterized in that each cooling tube is provided with a series of substantially flat fastening elements arranged at predetermined axial intervals, each fastening element being substantially radially directed in relation to the central axis of the inner housing.

9. Apparatus as claimed in claim 8, characterized in that each fastening element is connected to the ends of the interconnected housing parts by means of a connecting strip that is fitted to a side of the fastening element and the ends of the connecting strip are fitted to the outer circumference of the successive housing parts.

## Revendications

1. Appareil pour gazéifier des combustibles finement divisés, caractérisé en ce qu'il se compose d'un carter extérieur résistant à la pression, d'un carter intérieur placé dans le carter extérieur résistant à la pression, d'un groupe de tubes de refroidissement placés sur le côté intérieur du carter intérieur, dans lequel les tubes de refroidissement sont pourvus d'éléments de fixation qui passent par des ouvertures du carter intérieur et sont reliés au carter intérieur.

2. Appareil comme revendiqué dans la revendication 1, caractérisé en ce que le carter intérieur est cylindrique et est formé d'une série de parties cylindriques qui sont reliées entre elles d'une manière telle qu'une ouverture en forme de fente est invariablement formée entre les extrémités de chaque paire de parties successives du carter.

3. Appareil comme revendiqué dans la revendication 2, caractérisé en ce que chaque partie du carter est solidaire d'une section annulaire de renforcement à chaque extrémité placée en regard de la partie suivante du carter.

4. Appareil comme revendiqué dans la revendication 3, caractérisé en ce que chaque section de renforcement est une cornière carrée dont une aile est dirigée axialement d'une manière telle que l'extrémité de l'aile axiale forme l'extrémité de la partie de carter et que son autre aile soit dirigée radialement vers l'extérieur.

5. Appareil comme revendiqué dans la revendication 4, caractérisé en ce que l'extrémité de l'aile radiale de chaque section de renforcement est reliée à l'extrémité de l'aile radiale de la section de renforcement de la partie suivante du carter au moyen d'un élément d'étanchéité cylindrique.

6. Appareil comme revendiqué dans l'une quelconque des revendications 1 à 5, caractérisé en ce que les axes longitudinaux des tubes de refroidissement sont parallèles à l'axe longitudinal du carter intérieur.

7. Appareil comme renvendiqué dans la revendication 6, caractérisé en ce que la distance mutuelle d'espacement de tubes de refroidissement adjacents est inférieure à 1 mm.

8. Appareil comme revendiqué dans les revendications 6 et 7, caractérisé en ce que chaque tube de refroidissement est pourvu d'une série d'éléments plats de fixation qui sont placés à des intervalles axiaux prédéterminés, chaque élément de fixation étant orienté sensiblement radialement par rapport à l'axe central du carter intérieur.

9. Appareil comme revendiqué dans la revendication 10, caractérisé en ce que chaque élément de fixation est relié aux extrémités des parties de carter reliées entre elles au moyen d'une plaque de liaison qui est fixée sur un côté de l'élément de fixation et les extrémités de la plaque de liaison sont fixées sur la circonférence extérieure des parties successives de carter.

**Patentansprüche**

1. Vorrichtung zum Vergasen von feinzerteilten Brennstoffen, dadurch gekennzeichnet, daß sie aus einem druckbeständigen äußeren Gehäuse, einem in dem druckbeständigen äußeren Gehäuse angeordneten inneren Gehäuse und einer Gruppe von Kühlrohren auf der Innenseite des inneren Gehäuses besteht, und daß die Kühlrohre mit Befestigungselementen versehen sind, die sich durch Öffnungen in dem inneren Gehäuse erstrecken und mit dem inneren Gehäuse verbunden sind.

2. Vorrichtung nach Anspruch 1, dadurch gekennzeichnet, daß das innere Gehäuse zylindrisch ist und aus einer Reihe von zylindrischen Gehäuseteilen aufgebaut ist, die derart miteinander verbunden sind, daß zwischen den Enden jedes Paares von aufeinanderfolgenden Gehäuseteilen eine schlitzförmige Öffnung invariabel gebildet ist.

3. Vorrichtung nach Anspruch 2, dadurch gekennzeichnet, daß jeder Gehäuseteil an jedem Ende, welches dem nächsten Gehäuseteil gegenüberliegend angeordnet ist, mit einem ringförmigen Verstärkungsabschnitt einheitlich gebildet ist.

4. Vorrichtung nach Anspruch 3, dadurch gekennzeichnet, daß jeder Verstärkungsabschnitt ein rechtwinkliger Abschnitt ist, von welchem ein Schenkel derart axial gerichtet ist, daß das Ende des axialen Schenkels das Ende des Gehäuseteiles bildet, und von welchem der andere Schenkel radial nach außen gerichtet ist.

5. Vorrichtung nach Anspruch 4, dadurch gekennzeichnet, daß das Ende des radialen Schenkels jedes Verstärkungsabschnittes mit dem Ende des radialen Schenkels des Verstärkungsabschnittes des nächsten Gehäuseteiles mittels eines zylindrischen Dichtungselementes verbunden ist.

6. Vorrichtung nach den Ansprüchen 1 bis 5, dadurch gekennzeichnet, daß die Längsachsen der Kühlrohre zur Längsachse des inneren Gehäuses parallel verlaufen.

7. Vorrichtung nach Anspruch 6, dadurch gekennzeichnet, daß der gegenseitige Abstand benachbarter Kühlrohre kleiner als 1 mm ist.

8. Vorrichtung nach den Ansprüchen 6 bis 7, dadurch gekennzeichnet, daß jedes Kühlrohr mit einer Reihe von wesentlichen ebenen Befestigungselementen versehen ist, die in vorbestimmten axialen Abständen angeordnet sind, und daß jedes Befestigungselement in Relation zu der Mittelachse des inneren Gehäuses im wesentlichen radial gerichtet ist.

9. Vorrichtung nach Anspruch 8, dadurch gekennzeichnet, daß jedes Befestigungselement mit den Enden der miteinander verbundenen Gehäuseteile mittels eines Verbindungsstreifens verbunden ist, der an einer Seite des Befestigungselements angebracht ist, und daß die Enden des Verbindungsstreifens an dem Außenumfang der aufeinanderfolgenden Gehäuseteile angebracht ist.

0 079 092

FIG.1

# FIG.2

# FIG.3

# FIG.4

FIG.5